# EUROPÄISCHE PATENTSCHRIFT

(11) **EP 1 820 429 B1**
(45) Veröffentlichungstag und Bekanntmachung des Hinweises auf die Patenterteilung: **21.07.2010**
(21) Anmeldenummer: 07003316.2
(22) Anmeldetag: 16.02.2007
(51) Int. Cl.: A47J 31/44

(54) **Milchschaumerzeugungseinrichtung**
Device for creating frothed milk
Dispositif de production de mousse de lait

(30) Priorität: 21.02.2006 DE 102006008341
(43) Veröffentlichungstag der Anmeldung: 22.08.2007
(73) Patentinhaber: Eugster/Frismag AG, 8590 Romanshorn (CH)
(72) Erfinder: Mahlich, Gotthard, 61476 Kronberg (DE); Eugster, Arthur, 8590 Romanshorn (CH)
(74) Vertreter: Schubert, Siegmar

(56) Entgegenhaltungen:
- EP-A- 1 407 698
- WO-A-90/10411
- DE-U1- 29 502 594
- US-A1- 2003 131 735

## Beschreibung

Die Erfindung betrifft eine Mitchschaumerzeugungseinrichtung zur Erzeugung von Milchschaum aus Mitehpulver und heißem Wasser- nach dem Oberbegriff des Anspruchs 1.

Unter Milchschaum soll in dieser Anmeldung Schaum auf Getränken verstanden werden, der aus Milch besteht oder milchartige Bestandteile aufweist, wie zum Beispiel Schaum kakaohaltiger Getränke.

Ein weiterer Aspekt der Erfindung betrifft eine Kaffeemaschine, insbesondere Espressomaschine mit einem Heißwassererzeuger, mit einer Heißwasserpumpe sowie mit einerMilchschaumerzeugungseinrichtung der obigen Gattung . Der Begriff Espressomaschine wird nachfolgend in den Begriff Kaffeemaschine eingeschlossen.

Zum Aufschäumen von Milch zur Zubereitung von Cappuccino sind meistens Espressomaschinen mit Dampfdüsen ausgestattet. Zur Erzeugung von Milchschaum wird der Auslass der Dampfdüse von Hand so über der Oberfläche von in einem Gefäß befindlicher Milch geführt, dass beim Ausströmen des Dampfes eine Dreiphasezone: Dampf-Luft-Milch gebildet wird und dabei Milchschaum entsteht. Dieser Vorgang wird meist nur von professionellen Benutzern optimal beherrscht.

Aus diesem Grund wurden sogenannte Aufschäumhilfen entwickelt, bei denen der Dampfauslass einfach unter die Oberfläche der Milch getaucht wird und mittels einer in der Aufschäumhilfe befindlichen Venturidüse über eine über der Milchoberfläche verbleibende Luftzuleitung, durch den bei strömendem Dampf entstehenden Unterdruck, Luft in den Dampfauslass ansaugen, so dass die Dreiphasenzone unter der Milchoberfläche gebildet wird und somit auch ungeübten Benutzern das Aufschäumen von Milch ermöglichen.

Beide bekannte Verfahren haben den Nachteil, dass sowohl die einfachen Dampfdüsen als auch die Aufschäumhilfen, bedingt durch den durchströmenden Heißdampf, so stark erhitzt werden, dass Milchreste an den mit der Milch in Kontakt kommenden Düsenteilen festbacken und sogar anbrennen können. Bei den einfachen Dampfdüsen entsteht dieser Kontakt dadurch, dass bei entstehendem Milchschaum die Dreiphasenzone zunehmend unter dem aufschäumenden Schaum liegt und dadurch Milchschaum an der Düse festbackt. Bei den Aufschäumhilfen erfolgt das Festbacken systembedingt, da die Aufschäumhilfen in die Milch eingetaucht werden. In beiden Fällen müssen die verschmutzten Geräteteile nach Gebrauch gründlich gereinigt werden. Düsen aus schlecht wärmeleitendem Material ermöglichen zwar Verbesserungen durch geringere Festbackneigung, lösen aber nicht grundsätzlich das Verschmutzungs- und Reinigungsproblem.

Ein Reinigungsproblem ergibt sich auch bei bekannten Milchschaumsystemen, bei denen mittels des strömenden Dampfes über eine Schlauchleitung Milch aus einem Behälter in eine Schäumkammer angesaugt wird, in dieser aufgeschäumt wird und aus dieser direkt in das Trinkgefäß fließt. Bei diesen Systemen müssen nach dem Schäumvorgang die Schlauchzuleitungen und das Schäumsystem mit Wasser durchgespült werden, um Verschmutzungen durch Milchreste zu vermeiden.

Die Milchschaumerzeugung aus Frischmilch bildet ein weiteres Problem. Zum einen bestimmt der Fettgehalt der Milch die Qualität des entstehenden Milchschaums, bezogen auf Porengröße und Standfestigkeit, zum anderen soll die Milch relativ kalt sein. Damit ist auch das Einhalten von bestimmten Fettgehaltgrenzen und Temperaturgrenzen der Milch für das Aufschäumergebnis von Bedeutung. Ein weiterer Nachteil der Milchschaumerzeugung mit kalter Frischmilch ergibt sich daraus, dass der Heißdampf zwar bei der Erzeugung des Milchschaums die Restmilch im Schaumgefäß anwärmt, aber die Restmilch, die meist zusätzlich zu dem bei einem Cappuccino auf dem Kaffee aufliegenden Milchschaum dem Kaffee zugegossen wird, nicht die Kaffeetemperatur erreicht, und somit den Kaffee unerwünscht abkühlt.

Zum Stand der Technik gehört auch eine Milchschaumerzeugungseinrichtung einer Haushaltskaffeemaschine, mit der die Milchaufschäumung unter Nutzung der Dampfzufuhrleitung der Kaffeemaschine erleichtert werden soll (EP-A-O 509 505). Die Milchschaumerzeugungseinrichtung umfaßt einen Laminarisierungs-Konus, der fest an der Dampfzufuhrleitung unter Ausstoßöffnungen an dem ansonsten geschlossenen Ende der Dampfzufuhrleitung angebracht ist. Die Ausstoßöffnungen sind so gerichtet bzw. geneigt, dass die ausgestoßenen Dampfstrahlen längs der äußeren Oberfläche des Laminarisierungs-Konus geführt werden und dabei Luft für den Aufschäumeffekt mitreißen, wobei eine Laminar-Strömung des Dampfes auf der Konus-Oberfläche erzeugt wird, um das Eindringen der Dampfstrahlen in die Milch zu verbessern, und wobei in der Milch, in die der Laminarisierungs-Konus teilweise eingetaucht ist, Turbulenz erzeugt wird, um die Aufschäumung der Milch zu verbessern. Diese Milchschaumerzeugungseinrichtung hat, da der Laminarisierungs-Konus in die Milch eingeführt werden soll, das oben geschilderte Reinigungsproblem. Außerdem soll der Laminarisierungs-Konus zwei einander entgegenstehende Teilaufgaben lösen, nämlich Luft für den Aufschäumeffekt mitzureißen und in der Milch Turbulenz zu erzeugen, andererseits aber für ein tiefes Eindringen in die Milch die Dampfstrahlen teilweise zu laminarisieren. Für die Zubereitung von heißen Getränken aus Instant-Pulver wurde diese bekannte Einrichtung als ungeeignet befunden.

Zum aus der Praxis bekannten Stand der Technik gehören ferner Getränkezubereitung- und Verkaufsautomaten, bei denen in ein Gefäß erst Milchpulver eindosiert wird und dann heißes Wasser im wesentlichen unter Atmosphärendruck eingeleitet wird, woran anschließend mit einem maschinell angetriebenen Quirl das Milchpulver aufgelöst wird und unter Einquirlen von Umgebungsluft aus diesem Milchschaum erzeugt wird. Anschließend kann der Quirl aus dem Gefäß herausgezogen werden, um diesen zu spülen, und Espresso bzw. Kaffee kann unter den Schaum zur Fertigstellung des Getränks eingeleitet werden. Diese Milchschaumerzeugung ist insbesondere wegen der erforderlichen Reinigung des Quirls umständlich und die zur Ausübung des Verfahrens zu benutzende Einrichtung ist mechanisch kompliziert.

Zum Stand der Technik gehört eine Schaum erzeugende Getränkeabgabeeinrichtung mit geneigt tangential zu einem. Auffanggefäß positionierten Heißwasserdüsen (EP-A-0 060 645). Diese zwei oder mehr Düsen, die mit einem Wasserbehälter und einer Pumpe in Verbindung stehen, sind so angeordnet, dass jede Düse einen Flüssigkeitsstrahl in das Aufschäumgefäß einspritzt. Die Düsen sind gleichmäßig um eine zentrale Achse der Düsenanordnung bzw. eines Kopfs angeordnet, aus dem die Düsen geradlinig herausragen. Jeweils eine Düse, die von der zentralen Achse relativ entfernt angeordnet ist, soll in einer zur zentralen Achse beabstandeten Ebene gegenüber der Vertikalen geneigt sein. In dieser Weise sind die Düsen geneigt tangential positioniert. Damit soll erreicht werden, dass die auf das aufzulösende feste Material bzw. Pulver auftreffenden Wasserstrahlen auf dem Boden des Auffanggefäßes das Pulver in eine umlaufende wirbelnde Bewegung versetzen, um das Pulver rasch aufzulösen. Auch soll eine Schaumbildung unterstützt werden. Weiterhin kann die Getränkeabgabeeinrichtung außer den um die zentrale Achse symmetrisch angeordneten äußeren Düsen eine zentral angeordnete vertikale Düse zum weiteren Durchmischen aufweisen. Die Anordnung der aus einem Kopfteil herausragenden, geradlinigen Düsen in jeweils einer zur zentralen Achse beabstandeten Ebene bedeutet jedoch, dass diese Düsen über ihre gesamte Länge in der planen Ebene geneigt tangential angeordnet sind. In dieser Anordnung erhalten die aus den Düsen austretenden Heißwasserstrahlen somit durch die Düsen selbst keinen Drall, der beim Auftreffen der Heißwasserstrahlen auf das Pulver die Durchmischung des Pulvers mit dem Heißwasser und ein fast zeitgleiches Aufschäumen fördern könnte. Die Anordnung der aus dem Kopfteil nach unten vorstehenden Düsen ist wenig kompakt und die Düsen könnten beschädigt werden.

Gemäß dem Dokument EP-A-1 407 698 sind Düsen bzw. Wasserkanäle in einem zylindrischen Kopf ebenfalls nur in planen Ebenen bezüglich der Vertikalen geradlinig schräg geneigt angeordnet, wobei die Düsen bevorzugt in eine vertikalen Ebene liegen, in der auch eine Drehachse des Kopfs angeordnet ist. Demzufolge tritt kein Drall des in den Düsen strömenden Wassers in Umfangsrichtung des Kopfes auf. Vielmehr wird durch eine aufwendig erzeugte Drehbewegung des Kopfes, wegen der auch ein Dichtungsproblem zur Zufuhr des Wassers zu den Düsen in dem Kopf zu lösen ist, eine gleichmäßige Beaufschlagung des Pulvermaterials in einem unter dem Kopf aufgestellten Gefäß.angestrebt.

Gemäß dem Dokument DE 295 02 594 U1 weist eine Ausführungsform einer Aufschäumhilfe zwischen einem Düsenkopfoberteil und einem Düsenkopfunterteil radiale Dampfauslässe auf, um Getränke effektiv und klumpenfrei aus Instant-Pulver zuzubereiten und zu durchmischen. Eine andere Ausführungsform ist statt dessen mit einem vertikalen, unten offenen Venturirohr in einem Düsenkopf ausgebildet, der mit einem Dampfrohr in Verbindung steht. Somit sind weder die Dampfauslässe noch das Venturirohr so orientiert, dass ein umlaufender Wirbel erzeugt wird, der das Instant-Pulver erfasst.

Nach der US 200310131735 A1 sind radial geneigte Dampfaustrittsöffnungen unten an einem Schäumkopf zur Zubereitung von Milchschaum ebenfalls nicht geeignet, einen umlaufenden Wirbel zu erzeugen.

Gemäß der WO 90/10411 A münden in einer Vorrichtung zum Aufschäumen und/oder Emulgieren radial zur Vertikalen geneigte Dampfführungskanäte in Dampfaustrittsdüsen, die axial parallel zu der Mittelachse M eines Turbinenrads angeordnet sind, um dieses in einer Vorrichtung zum Aufschäumen und/oder Emulgieren anzutreiben.

Der vorliegenden Erfindung liegt die Aufgabe zugrunde, eine Milchschaumerzeugungseinrichtung der eingangs genannten Gattung mit einem kompakteren Heißwasserbrausekopf, der wirkungsmäßig weiterentwickelt ist, bereit zu stellen, mit dem einfach in einem Arbeitsgang Milchschaum hoher Güte ohne Frischmilch erzeugt wird und Spül- bzw. Reinigungsvorgänge reduziert werden können.

Sie soll hierzu mit möglichst wenig beweglichen Teilen aufgebaut sein.

Diese Aufgabe wird erfindungsgemäß mit einer Milchschaumerzeugungseinrichtung mit den Merkmalen des Anspruchs 1 unkompliziert gelöst.

Mit dieser Milchschaumerzeugungseinrichtung wird Milchschaum aus Milchpulver erzeugt, welches mit Heißwasserstrahlen beaufschlagt wird, die unter ausreichendem Heißwasserdruck gezielt aus der Milchschaumerzeugungseinrichtung ausströmen. Der Heißwasserdruck ist ausreichend, wenn er die bei Espressomaschinen typische Größe hat, die entweder durch eine Wasserpumpe mit nachfolgendem Durchlauferhitzer erzeugt wird oder durch einen Heißwasserboiler, aus dem erhitztes Wasser durch Dampfdruck ausgestoßen wird. Mit unter solchem Druck ausströmenden Wasserstrahlen wird das in einem Aufschäumgefäß befindliche Milchpulver in für die Milchschaumzubereitung einer Getränkeportion dosierter, angehäufter Menge rasch vollständig durchdrungen und aufgelöst, wobei dann fast zeitgleich unter Einschluß von Luft Milchschaum entsteht. Mit den Heißwasserstrahlen kann somit genügend kinetische Energie in das aufgehäufte Milchpulver eingebracht werden, um die voranstehenden Funktionen durchzuführen, ohne das angehäufte Milchpulver in unerwünschter Weise teilweise fortzublasen oder durch zu hohe Temperatur zu schädigen.

Die Milchschaumerzeugungseinrichtung umfasst einen im wesentlichen rotationssymmetrischen Heißwasserbrausekopf mit Heißwasserkanälen, die gemäß Anspruch 1 im einzelnen definiert sind und eine gleichmäßige Verteilung der aus ihm austretenden Heißwasserstrahlen ergeben. Außen kann der Heißwasserbrausekopf herstellungsgünstig und handhabungsfreundlich im wesentlichen zylindrisch oder als Kegelstumpf geformt sein. Zu der Milchschaumerzeugungseinrichtung gehört außer einem Heißwassererhitzer ein

Heißwasserdruckerzeuger, die über eine Heißwasserzuleitung mit dem Heißwasserbrausekopf in Verbindung stehen.

Die Funktionen der Wassererhitzung und Heißwasserdruckerzeugung bzw. -erhöhung für den Heißwasserbrausekopf können durch Verwendung einer Wasserpumpe vor einem Wassererhitzer, der in diesem Fall ein einfacher Durchlauferhitzer sein kann, gemäß Anspruch 15 getrennt sein, was einen konstanten Heißwasserdruck ermöglicht. Statt dessen können diese Funktionen aber auch in einem Wasserboiler vereint sein, der nicht nur Wasser erhitzt, sondern auch unter Heißwasser- bzw. Dampfdruck ausstößt.

Besonders vorteilhaft ist eine Integration der erfindungsgemäßen Milchschaumerzeugungseinrichtung mit einer Kaffeemaschine, insbesondere Espressomaschine, nach Anspruch 14, da hierbei deren Wassererhitzer und deren Heißwasserdruckerzeuger für die Herstellung von Milchschaum aus Milchpulver nach dem erfindungsgemäßen Verfahren genutzt werden können, ohne überraschenderweise zwangsläufig eine andere Dimensionierung, insbesondere des Heißwasserdruckerzeugers, zu bedingen.

Zur Erzeugung von Milchschaum unter Verwendung einer Kaffeemaschine, insbesondere Espressomaschine, gemäß Anspruch 14, die zum Aufschäumen unter Druck stehendes Heißwasser zur Verfügung stellt, und unter Verwendung von Milchpulver statt wie sonst bei Kaffeemaschinen/Espressomaschinen üblich Milch, wird zunächst eine bestimmte Menge Milchpulver in ein oben offenes Gefäß gefüllt, woran anschließend dieses unter dem Heißwasserbrausekopf der Milchschaumerzeugungseinrichtung abgestellt werden kann und sich somit das Milchpulver im Abstand unter dem Heißwasserbrausekopf befindet. Dann kann die Heißwasserzufuhr zu dem Heißwasserbrausekopf gestartet werden. Das in den Heißwasserbrausekopf einströmende Heißwasser tritt aus diesem unter hohem Druck aus und wird, der Konfiguration der Heißwasserkanäle in den Heißwasserbrausekopf folgend, über das Milchpulver und durch seine kinetische Energie auch in das Milchpulver gespült. Das Milchpulver wird somit gleichmäßig und rasch aufgelöst, womit es einen Zustand annimmt, in dem verstärkt die Milchschaumerzeugung erfolgt. Zur Milchschaumerzeugung haben die aus den Heißwasserkanälen strömenden Heißwasserstrahlen eine solche Geschwindigkeit, dass Luft mitgerissen wird, und sie haben soviel kinetische Energie, dass sie bei Auftreffen auf die in dem Gefäß entstehende Milch diese sofort aufschäumen. Der Heißwasserbrausekopf wird dazu so eingestellt, dass er sich stets oberhalb des entstehenden Schaums befindet und damit weitgehend frei von Restmilch-Verschmutzungen bleibt. Durch konstante Zusammensetzung des Milchpulvers und die typischerweise in Kaffeemaschinen exakt gesteuerte Temperatur und vorgegebenen Druck des Heißwassers, wird eine Milchschaumerzeugung gleichmäßig guter Qualität gewährleistet. Ein Zusatzvorteil besteht darin, dass Cappuccino, dem der nach dem Verfahren hergestellte Milchschaum aus dem Aufschäumgefäß zugegeben wird, durch gleichzeitiges Zugießen von Restmilch nicht abkühlt.

Zur gleichmäßigen Verteilung der Heißwasserstrahlen auf dem mit ihm in einem Aufschäumgefäß aufgehäuften Milchpulver hat es sich als sehr günstig herausgestellt, wenn gemäß Anspruch 17 nahe der äußeren Mantelfläche des Heißwasserbrausekopfes etwa 10 Heißwasserkanäle in zueinander gleichen Umfangsabständen angeordnet sind, und nahe der zentralen Achse des Heißwasserbrausekopfes 3 bis 4 Heißwasserkanäle in zueinander gleichen Umfangsabständen arrangiert sind.

Eine erhebliche Verbesserung der Milchschaumbereitung aus Milchpulver wird nach Anspruch 1 durch eine definierte Schräganordnung der Heißwasserkanäle, die nahe der äußeren Mantelfläche des Heißwasserbrausekopfes vorgesehen sind, in Umfangsrichtung erzielt. Durch Versuche hat sich eine Neigung der nahe der äußeren Mantelfläche angeordneten Heißwasserkanäle um 2 bis 12° zur Senkrechten im Umfangsrichtung als zweckmäßig herausgestellt, wobei es gemäß Anspruch 2 genügt, dass nur jeweils ein unterer Abschnitt eines solchen Heißwasserkanals geneigt ist, während der darüber befindliche Abschnitt, der die Verbindung zu der Heißwasserzuleitung herstellt, gerade vertikal sein kann.

Gemäß Anspruch 3 können die nahe der äußeren Mantelfläche angeordnet ten Heißwasserkanäle aber auch fertigungsgünstig durchgängig gegenüber der Senkrechten in der angegebenen Weise, d.h. um 2 bis 12° zur Senkrechten geneigt sein.

Wesentlich ist bei den obigen alternativen Ausbildungen der nahe der äußeren Mantelfläche angeordneten Heißwasserkanäle, dass aus ihnen die äußeren Heißwasserstrahlen entsprechend dem schrägen Heißwasserkanalverlauf zumindest in deren unteren Abschnitten mit einem Drall in Umfangsrichtung des Heißwasserbrausekopfes aus diesem austreten und mit dem Drall auf das Milchpulver treffen. Dies fördert die Durchmischung des Pulvers mit dem Heißwasser sowie das fast zeitgleiche Aufschäumen. Die nahe der zentralen Achse des Heißwasserbrausekopfes austretenden Wasserstrahlen können dagegen, entsprechend dem vertikalen Verlauf der in diesem Bereich des Heißwasserbrausekopfes angeordneten Heißwasserkanäle senkrecht austreten und auf das Milchpulver treffen, da sie praktisch durch einen Vorhang der mit Drall aus den äußeren Heißwasserkanälen strömenden Heißwasserstrahlen von der äußeren Umgebung weitgehend abgeschirmt sind. Der sehr wirksame Brausekopf kann kompakt, z.B. mit einem Außendurchmesser von 20mm, ausgeführt sein, wobei die Abmessungen des Brausekopfes unkritisch sind.

Konstruktiv und zur gleichmäßigen Heißwasserstrahlenkonfiguration vorteilhaft ist der Heißwasserbrausekopf der Kaffeemaschine gemäß Anspruch 4 mit einem zylindrischen Innenkörper und einem topfförmigen Außenkörper ausgebildet, der den Innenkörper einschließt. Aus der äußeren Mantelfläche des zylindrischen Innenkörpers sind im wesentlichen die Heißwasserkanäle, nämlich als seitlich offene Heißwasserkanäle oder Schlitze, ausgeformt. Die Heißwasserkanäle werden vervollständigt durch eine innere Mantelfläche des über den Innenkörper gestülpten topfförmigen Außenkörpers, der Heißwasserkanäle seitlich dicht abdeckt. Die abgedeckten Heißwasserkanalschlitze in der Mantelfläche des Innenkörpers können beispielsweise bei rechteckförmigen Querschnittsflächen 0,2mm breit und 0,2mm tief sein. Es sind aber auch anders geformte Querschnitte mit gleichen oder ähnlichen Durchgangsflächen möglich.

Die nahe der zentralen Achse des Heißwasserbrausekopfes senkrecht verlaufenden Heißwasserkanäle können zylindrische Löcher sein, die einfach z.B. durch Bohren erzeugt werden und etwa gleiche Durchgangsflächen aufweisen wie die äußeren Heißwasserkanäle.

Damit sämtliche Heißwasserkanäle gleichmäßig mit dem über die Heißwasserzuleitung zugeführten heißen Wasser beaufschlagt werden, beinhaltet der Heißwasserbrausekopf gemäß Anspruch 4 zweckmäßig eine Heißwasserverteilkammer, die zwischen einer Oberseite des Außenkörpers und einer Oberseite des Innenkörpers freigelassen ist und in den die Heißwasserzuleitung mündet. Somit wird den einzelnen Heißwasserkanälen das Heißwasser über den Heißwasserverteilkammer gleichmäßig zugeführt.

In der vorliegenden Beschreibung werden die im wesentlichen aus der äußeren Mantelfläche des Innenkörpers ausgeformten Heißwasserkanäle auch als äußere Heißwasserkanäle bezeichnet, und nahe der zentralen Achse des Innenkörpers als Bohrungen ausgebildete Heißwasserkanäle werden auch als innere Heißwasserkanäle bezeichnet.

In der Ausführungsform des Heißwasserbrausekopfs nach Anspruch 5 erweitern sich der Innenkörper und demgemäß der ihn bedeckende Ring - gegebenenfalls mit Ausnahme eines der Befestigung des Innenkörpers in dem Ring dienenden Abschnitts - nach unten kegelstumpfförmig. Die äußeren Heißwasserkanäle sind hier außerdem auch bezüglich der fiktiven zentralen Achse des Heißwasserbrausekopfes nicht nur in Umfangsrichtung geneigt, sondern auch radial geneigt. Dementsprechend verlaufen die äußeren Heißwasserstrahlen aus dem Heißwasserbrausekopf nicht nur in Umfangsrichtung gegenüber der Vertikalen geneigt, sondern auch in radialer Richtung nach unten aufgeweitet. Damit kann eine größere Portion bzw. Oberfläche Milchpulver mit den Heißwasserstrahlen beaufschlagt werden, Die inneren Heißwasserstrahlen können auch hier, wie bei der Ausführungsform mit dem zylindrischen Innenkörper, senkrecht strömen.

Der im wesentlichen kegelstumpfförmige Innenkörper und der ihn mit einem Ringabschnitt bedeckende Außenkörper können nach Anspruch 6 jeweils einen zur im Bedarfsfall leicht lösbaren Anbringung des Innenkörpers in dem Außenkörper dienenden oberen zylindrischen Abschnitt aufweisen, der mit Befestigungselementen, insbesondere einem Gewinde versehen ist, welches in dem Innenkörper als Außengewinde geformt ist, das durch Abschnitte der Heißwasserkanalschlitze durchdrungen ist.

Statt des zylindrischen Abschnitts kann zur gewindelosen Verbindung nach Anspruch 7 der kegelstumpfförmige Innenkörper einen Bund aufweisen, der in eine innere Ringnut in den kegelstumpfförmigen Ring passt, in den der Innenkörper eingesetzt werden kann. Der Innenkörper und/oder der Ring sind dazu aus elastischem Material wie Neopren gefertigt, so dass der Ring kraftschlüssig, aber manuell lösbar gehalten wird.

Gemäß Anspruch 8 ist in dem Heißwasserbrausekopf zwischen der Heißwasserverteilkammer und den Heißwasserkanälen vorteilhaft ein Sieb angeordnet, um Verstopfungen der Heißwasserkanäle, die kleine freie Querschnitte haben, durch Teilchen zu vermeiden, die mit dem Heißwasser zugeführt werden. Das Sieb ist entsprechend feinmaschig gewählt.

Das Sieb kann gemäß Anspruch 9 zweckmäßig mit einem aus der Oberseite des Innenkörpers ausgeformten Abstandshalter gehalten sein, der ein zwischen der Anordnung der Heißwasserkanäle in der äußeren Mantelfläche des Innenkörpers und der Anordnung der Heißwasserkanäle nahe der zentralen Achse ausgeformter Abstandsring sein kann.

Zur leichten Montage des Siebs, und um das Innere des Heißwasserbrausekopfes zur Wartung, insbesondere Reinigung, zugänglich zu gestalten, sind vorteilhaft die Merkmale gemäß Anspruch 10 vorgesehen, dass der topfförmige Außenkörper aus einem Oberteil und einem in dieses eingeschraubten zylindrischen Ring besteht, der mit dem zylindrischen Innenkörper fest verbunden ist, wobei aus dem Oberteil der Innenflansch ausgeformt ist, der ein Außengewinde aufweist, um mit einem Innengewinde in dem oberen Abschnitt des zylindrischen Rings verschraubbar zu sein. Zur Wartung, insbesondere zur Reinigung des Siebs, kann somit der zylindrische Ring mit dem Innenteil einfach von dem Oberteil abgeschraubt werden, womit das Sieb und die Heißwasserverteilkammer offen liegen. Im verschraubten Zustand ist der Innenraum mit der Heißwasserverteilkammer nach augen zweckmäßig durch einen Dichtring zwischen dem Oberteil und dem zylindrischen Ring gemäß Anspruch 11 abgedichtet. Die Öffnungsmöglichkeit zur Wartung ist auch bei im wesentlichen kegelstumpfförmigem Innenkörper und Ring gemäß Anspruch 7 verwirklicht.

Um Verbrennungen des Bedieners der Milchschaumerzeugungseinrichtung auszuschließen, auch wenn dieser ungeschickt oder unaufmerksam ist, besteht die Schaumerzeugungseinrichtung zweckmäßig aus schlecht wärmeleitendem Material.

Ausführungsbeispiele der Erfindung werden im folgenden anhand einer Zeichnung mit sechs Figuren beschrieben, woraus sich weitere Einzelheiten und vorteilhafte Merkmale der Erfindung ergeben können. Es zeigt:
- Figur 1: in schematischer schaubildlicher Darstellung eine Kaf- feemaschine mit Milchschaumerzeugungseinrichtung im Betrieb,
- Figur 2: einen Heißwasserbrausekopf mit unterbrochen darge- stellter Heißwasserzuleitung über einem Aufschäumge- fäß mit Milchpulver in Arbeitsstellung und in Funktion,
- Figur 3: eine Unterseite des Heißwasserbrausekopfes,
- Figur 4: eine Seitenansicht, teilweise geschnitten, durch eine ers- te Ausführungsform des Heißwasserbrausekopfes,
- Figur 5: eine Seitenansicht, teilweise geschnitten, durch eine zweite Ausführungsform des Heißwasserbrausekopfes, und
- Figur 6: eine Seitenansicht, teilweise geschnitten, durch eine drit- te, bevorzugte Ausführungsform des Heißwasserbrause- kopfes.

In sämtlichen Figuren sind übereinstimmende Teile mit gleichen Bezugszeichen versehen.

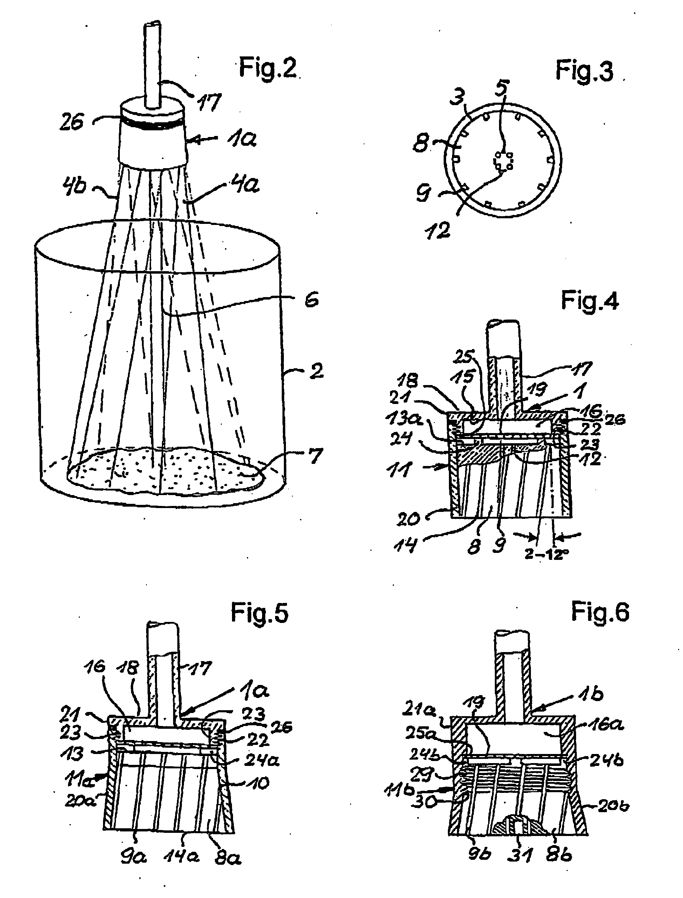

In den Figuren 2 bis 6 ist jeweils nur der Heißwasserbrausekopf der Milchschaumerzeugungseinrichtung gezeigt, nicht aber der zu einer üblichen Kaffeemaschine, insbesondere Espressomaschine, gehörende Heißwasserdruckerzeuger in Verbindung mit einem Wassererhitzer, die mit dem Heißwasserbrausekopf in Verbindung stehen.

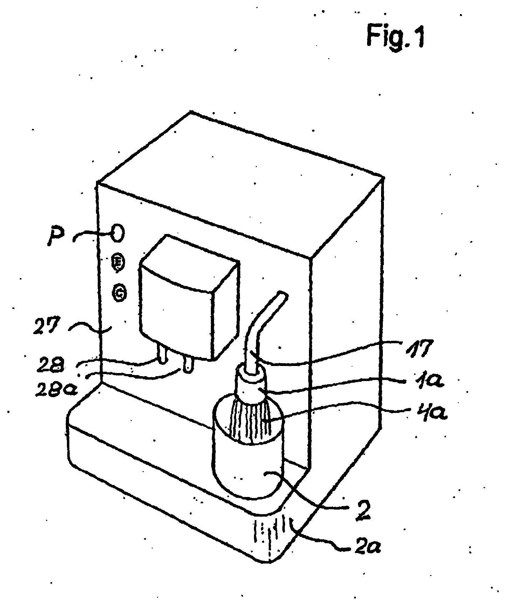

In Figur 1 ist schematisch eine Kaffeemaschine üblicher Bauart mit einem nicht sichtbaren Wassererhitzer und Heißwasserdruckerzeuger dargestellt. Auf einer Vorderseite 27 sind Bedienungsknöpfe zum Einschalten P sowie zum Bereiten von Espresso E und Cappuccino C erkennbar. Aus der Vorderseite ragen Ablaufrohre 28 für Espresso sowie ein Heißwasserbrausekopf 1 zur Milchschaumbereitung.

Mit der Kaffeemaschine kann durch Aktivieren des Heißwasserbrausekopfs 1a in einem Aufschäumgefäß 2, welches auf einem Fuß 2a der Kaffeemaschine gestellt ist, Milchschaum erzeugt werden, wie weiter unten erläutert, und anschließend kann der Milchschaum mit Espresso oder Kaffee zusammengeführt werden, der in der gleichen Maschine bereitet wurde.

In Figur 2 ist dargestellt, wie der Heißwasserbrausekopf 1 a zum Bereiten von Milchschaum über einer Portion Milchpulver 7, angeordnet ist, die in einem Aufschäumgefäß 2 eingebracht ist. Der Heißwasserbrausekopf 1 a befindet sich dabei im Abstand oberhalb des Milchpulvers 7. Über einer Heißwasserzuleitung 17 empfängt der Heißwasserbrausekopf 1a von dem Wassererhitzer und dem Heißwasserdruckerzeuger der Kaffeemaschine unter hohem Druck Heißwasser. Aus Figur 2 ist erkennbar, wie äußere Was serstrahlen 1a, 1b und innere Wasserstrahlen 6, die aus dem Heißwasserbrausekopf 1a austreten, annähernd gleichmäßig verteilt auf die Portion Milchpulver 7 treffen, um dieses aufzulösen und unter Einschluß der von den inneren Wasserstrahlen und äußeren Wasserstrahlen mitgerissenen Luft größtenteils in Milchschaum zu verwandeln.

Die Konfiguration, insbesondere gleichmäßige Verteilung der äußeren Wasserstrahlen 4a, 4b und der inneren Wasserstrahlen 6 ergibt sich aus der Anordnung von Heißwasserkanälen in dem Heißwasserbrausekopf 1 a, aus deren offene Seiten sie austreten. Zu der Anordnung der Heißwasserkanäle wird zunächst auf die einfachste erste Ausführungsform des Heißwasserbrausekopfs 1 Bezug genommen, die in den Figuren 3 und 4 dargestellt ist, und dann wird auf die zweite Ausführungsform des Heißwasserbrausekopfes 1 a gemäß den Figuren 1, 2, 5 übergegangen. Die Unterseite des Heißwasserbrausekopfes 1 a ist - abgesehen von etwaigen Dimensionierungsunterschieden - gleich der in Figur 3 dargestellten Unterseite des Heißwasserbrausekopfs 1, aus der offene Seiten von Heißwasserkanälen 9, 12 ersichtlich sind.

Es handelt sich in Figur 3 um die inneren Heißwasserkanäle 12, die als Bohrungen ausgeführt sind und die nahe einer nicht bezeichneten zentralen Achse auf einem gedachten inneren Kreis 5 angeordnet sind, sowie um In einer Mantelfläche 3 des Innenkörpers ausgeformte äußere Heißwasserkanäle 9 mit rechteckförmigem Querschnitt. Wie aus Figur 3 ersehen werden kann, sind die äußeren Heißwasserkanäle 9 in Umfangsrichtung der Mantelfläche 3 gleichmäßig beabstandet. Auch die inneren Heißwasserkanäle 12 weisen zueinander gleiche Abstände auf dem gedachten Kreis 5 in Umfangsrichtung auf.

In der ersten Ausführungsform des Heißwasserbrausekopfs 1 verlaufen die Heißwasserkanäle 9, die im wesentlichen in dem zylindrischen Innenkörper 8 an dessen Mantelfläche 3 - siehe auch Figur 4 - ausgeformte Heißwasserkanalschlitze gleichbleibender Tiefe sind, über die gesamte Höhe des zylindrischen Innenkörpers zur Senkrechten in Umfangsrichtung geneigt.

Die als Bohrungen ausgebildeten inneren Heißwasserkanäle 12 verlaufen hingegen in allen Ausführungsformen des Heißwasserbrausekopfs ungeneigt senkrecht.

Aus Figur 4 kann weiterhin ersehen werden, wie ein allgemein mit 11 bezeichneter Außenkörper den zylindrischen Ring 20 umfaßt, der an seinem oberen Teil ein Innengewinde 22 aufweist, sowie ein Oberteil 21 umfaßt, aus dem nach unten ein Innenflansch 23 mit Außengewinde herausragt, welches in das Innengewinde 22 eingreift, um das Oberteil 21 mit dem zylindrischen Ring 20 verschraubt zu halten. Der dadurch gebildete Innenraum, im wesentlichen eine Heißwasserverteilkammer 16, wird durch einen Dichtring 26 im Bereich der Verschraubung abgedichtet. In die durch das Oberteil 21 oben begrenzte Heißwasserverteilkammer mündet die Heißwasserzuleitung 17.

Wie weiter aus Figur 4 ersichtlich, ist auf einer Oberseite 13 des zylindrischen Innenkörpers 8 ein Abstandsring 24 ausgeformt, auf dem ein Sieb 19 aufliegt. Das Sieb wird zwischen dem Abstandsring 24 und dem Innenflansch 23 des Oberteils gehalten.

Die zweite Ausführungsform gemäß Figur 5 unterscheidet sich von der ersten Ausführungsform gemäß den Figuren 3 und 4 im wesentlichen dadurch dass die äußeren Heißwasserkanäle 9a nicht über ihre gesamte Länge zur Vertikalen in Umfangsrichtung geneigt verlaufen, jedoch in ihren unteren Abschnitten. Die äußeren Heißwasserkanäle 9a sind außerdem auch bezuglich der nicht dargestellten zentralen Achse des Heißwasserbrausekopfes 1a radial geneigt, da der untere Teil des Innenkörpers 8a glockenförmig bzw. kegelstumpfförmig ist.

Dementsprechend verlaufen in Figur 2 die äußeren Heißwasserstrahlen 4a, 4b aus dem Heißwasserbrausekopf 1a nicht nur in Umfangsrichtung gegenüber der Vertikalen geneigt, sondern auch in radialer Richtung nach unten aufgeweitet, und treffen schräg auf dem Milchpulver 7 auf. Infolge der Aufweitung der äußeren Heißwasserstrahlen kann eine große Portion bzw. Oberftäche Milchpulver mit den Heißwasserstrahlen aus dem kompakten Heißwasserbrausekopf 1a beaufschlagt werden. Die inneren Heißwasserstrahlen können auch hier, wie bei der ersten Ausführungsform, senkrecht strömen

Die dritte Ausführungsform gemäß Figur 6 des Heißwasserbrausekopfs 1b unterscheidet sich gegenüber der zweiten Ausführungsform gemäß Figur 5 dadurch, dass die dritte Ausführungsform einen einstückigen Außenkörper 11b, bestehend aus Oberteilabschnitt 21 a und im wesentlichen glockenförmigen Ringabschnitt 20b, aufweist, wobei ein Innenkörper 8b mit einem Außengewinde 29 an seinem oberen Abschnitt in ein Innengewinde 30 des Außenkörpers 11b eingeschraubt ist. Der Heißwasserbrausekopf 1 b kann daher zu Wartungszwecken leicht geöffnet werden, wozu ein Münzschlitz 31 dient, und danach verschlossen werden. Die Heißwasserkanalschlitze 9b in dem Mantel des Innenkörpers 8b sind im wesentlichen wie die Heißwasserkanalschlitze 9a der zweiten Ausführungsform ausgebildet und durchdringen mit ihren oberen Abschnitten das Innengewinde 30. Zur Halterung des Siebs 19 an einem Innenrand 25a unten an einer Heißwasser-Verteilkarnmer 16a dienen bei dieser Ausführungsform periphere Vorsprünge 24b, die oben aus dem Innenkörper ausgeformt sind.

Bezugszahlenliste
- 1, 1 a, 1 b: Heißwasserbrausekopf
- 2: Aufschäumgefäß
- 2a: Fuß einer Kaffeemaschine
- 3: äußerer Kreis des Innenkörpers
- 4a, b: äußere Heißwasserstrahlen
- 5: innerer gedachter Kreis
- 6: innere Heißwasserstrahlen
- 7: Milchpulver
- 8: zylindrischer Innenkörper
- 8a, 8b: Innenkörper mit glockenförmig unterem Teil
- 9, 9a, 9b: äußere Heißwasserkanäle (Schlitze)
- 10: Mantelfläche des Innenkörpers
- 11, 11a, 11 b: Außenkörper (topfförmig)
- 12: innere Heißwasserkanäle (Bohrungen)
- 13, 13a: Innenkörper Oberseite
- 14, 14a: Innenkörper Unterseite
- 15: Außenkörper innere Unterseite
- 16, 16a: Heißwasserverteilkammer
- 17: Heißwasserzuleitung
- 18: Außenkörper Oberseite
- 19: Sieb
- 20, 20a: Ring
- 20b: Ringabschnitt
- 21: Oberteil
- 21 a: Oberteilabschnitt
- 22: Innengewinde
- 23: Innenflansch mit Außengewinde
- 24, 24a: Abstandsring
- 24b: Vorsprünge
- 25: Rand des Innenflansches
- 25a: Innenrand
- 26: Dichtring
- 27: Vorderseite der Kaffeemaschine
- 28, 28a: Ablaufrohr
- 29: Außengewinde
- 30: Innengewinde
- 31: Münzschlitz

## Patentansprüche

**1.** Milchschaumerzeugungseinrichtung zur Erzeugung von Milchschaum aus Milchpulver (7) und Heißwasser, mit einer Heißwasserzuleitung und einem Wassererhitzer,
wobei die Milchschaumerzeugungseinrichtung einen im Wesentlichen rotationssymmetrischen Heißwasserbrausekopf (1, 1 a, 1b) umfasst, der nach unten gerichtete und unten offene Heißwasserkanäle (9, 9a, 9b, 12) aufweist, von denen einige (9, 9a, 9b) nahe einer äußeren Mantelfläche des Heißwasserbrausekopfes geneigt angeordnet sind und wenigstens ein Heißwasserkanal (12) nahe einer zentralen Achse des Heißwasserbrausekopfes vertikal verläuft, und
wobei die Heißwasserkanäle über eine Heißwasserverteilkammer (16, 16a) in dem Heißwasserbrausekopf und die Heißwasserzuleitung (17) mit einem Heißwasserdruckerzeuger und dem Wassererhitzer in Verbindung stehen, **dadurch gekennzeichnet,**
**dass** zumindest jeweils ein unterer Abschnitt der nahe der äußeren Mantelfläche angeordneten Heißwasserkanäle (9, 9a, 9b) gegenüber der Senkrechten in Umfangsrichtung um 2 bis 12° geneigt sind und dass mehrere nahe der zentralen Achse des Heißwasserbrausekopfes angeordneten Heißwasserkanäle (12) parallel zu der zentralen Achse verlaufen.

**2.** Milchschaumerzeugungseinrichtung nach Anspruch 1,
**dadurch gekennzeichnet,**
**dass** lediglich jeweils ein unterer Abschnitt der nahe der äußeren Mantelfläche angeordneten Heißwasserkanäle (9a, 9b) gegenüber der Senkrechten um 2 bis 12° geneigt sind.

**3.** Milchschaumerzeugungseinrichtung nach Anspruch 1,
**dadurch gekennzeichnet,**
**dass** die nahe der äußeren Mantelfläche angeordneten Heißwasserkanäle (9) über ihre ganze Länge gegenüber der Senkrechten um 2 bis 12° geneigt sind.

**4.** Milchschaumerzeugungseinrichtung nach einem der Ansprüche 1-3,
**dadurch gekennzeichnet,**
**dass** der Heißwasserbrausekopf (1, 1a) einen im wesentlichen zylindrischen Innenkörper (8, 8a, 8b) aufweist, in dessen äußerer Mantelfläche seitlich offene Heißwasserkanalschlitze ausgeformt sind, und der innen nahe der zentralen Achse verlaufende Bohrungen als innere Heißwasserkanäle (12) aufweist,
**dass** über den zylindrischen Innenkörper ein im wesentlichen zylindrischer Ring (20, 20a) bzw. Ringabschnitt (20b) gestülpt ist, der die Heißwasserkanalschlitze (9, 9a bzw. 9b) seitlich dicht abdeckt, **dass** der Ring (20, 20a) bzw. Ringabschnitt (20b) Bestandteil eines Außenkörpers (11,11a) ist, der außerdem ein Oberteil (21) bzw. Oberteilabschnitt aufweist, und
**dass** zwischen einer inneren Unterseite (15) des Außenkörpers und einer Oberseite (13, 13a) des Innenkörpers eine Heißwasserverteilkammer (16) freigelassen ist, in die die an dem Oberteil (21) bzw. Oberteilabschnitt (21b) angeordnete Heißwasserzuleitung (17) mündet.

**6.** Milchschaumerzeugungseinrichtung nach Anspruch 5,
**dadurch gekennzeichnet,**
**dass** der kegelstumpffärmige Innenkörper (ab) und der ihn mit einem Ringabschnitt (20b) bedeckende Außenkörper (1 1 b) jeweils einen der lösbaren Anbringung des Innenkörpers in dem Außenkörper dienenden oberen zylindrischen Abschnitt aufweisen, der mit Befestigungselementen, insbesondere einem Gewinde (29), versehen ist, das an dem Innenkörper (20b) als Außengewinde geformt ist, welches durch Abschnitte der Heißwasserkanalschlitze (9b) durchdrungen ist.
**dadurch gekennzeichnet,**
**dass** in dem Heißwasserbrausekopf (1, 1a, 1b) zwischen dem Heißwasserverteilraum (16, 16a) und den Heißwasserkanälen (9, 9a, 9b, 12) ein Sieb (19) angeordnet ist.

**9.** Milchschaumerzeugungseinrichtung nach Anspruch 8,
**dadurch gekennzeichnet,**
**dass** das Sieb (19) zwischen einem Innenflansch (23) in dem Oberteil (21) und wenigstens einem aus der Oberseite des Innenkörpers (8, 8a, 8b) ausgeformten Abstandshalter gehalten ist.

**10.** Milchschaumerzeugungseinrichtung nach Anspruch 6 oder 9, **dadurch gekennzeichnet,**
**dass** der topfförmige Außenkörper (11, 11a) aus dem Oberteil (21 und einem in dieses eingeschraubten, zylindrischen Abschnitt des Rings (20, 20a) besteht, der mit dem Innenkörper (8, 8a) fest verbunden ist,
**dass** aus dem Oberteil (21) der Innenflansch (23) ausgeformt ist, der ein Außengewinde aufweist, und
**dass** in einem oberen zylindrischen Abschnitt des Rings (20, 20a) ein Innengewinde (22) geschnitten ist, das in das Außengewinde auf dem Innenflansch (23) aufschraubbar ist.

**11.** Milchschaumerzeugungseinrichtung nach Anspruch 10,
**gekennzeichnet durch**
einen Dichtring (26) zwischen dem Oberteil (21) und dem Ring (20, 20a) im zusammengeschraubten Zustand.

**12.** Milchschaumerzeugungseinrichtung nach einem der Ansprüche 1 bis 11,
**dadurch gekennzeichnet,**
**dass** die Schaumerzeugungseinrichtung aus schlecht wärmeleitendem Material besteht.

**13.** Milchschaumerzeugungseinrichtung nach Anspruch 12,
**dadurch gekennzeichnet,**
**dass** der Einsatz aus Neopren besteht.

**14.** Kaffeemaschine, insbesondere Espressomaschine, mit einem Wassererhitzer und einem Heißwasserdruckerzeuger sowie mit einer Milchschaumerzeugungseinrichtung nach einem der vorangehenden Ansprüche,
**dadurch gekennzeichnet,**
**dass** als Heißwasserdruckerzeuger und Wassererhitzer der Milchschaumerzeugungseinrichtung der Heißwasserdruckerzeuger und der Wassererhitzer der Kaffeemaschine verwendet werden, die über die Heißwasserzuleitung (17) mit dem Heißwasserbrausekopf in Verbindung stehen.

**15.** Milchschaumerzeugungseinrichtung nach einem der Ansprüche 1-13,
**dadurch gekennzeichnet,**
**dass** der Heißwasserdruckerzeuger eine Wasserpumpe ist.

**16.** Milchschaumerzeugungseinrichtung nach einem der Ansprüche 1-13,
**dadurch gekennzeichnet,**
**dass** der Heißwasserdruckerzeuger und der Wassererhitzer in einem Wasserboiler nach dem Dampfdruckprinzip integriert sind.

**17.** Milchschaumerzeugungseinrichtung nach einem der Ansprüche 1-13, 15, 1 6,
**dadurch gekennzeichnet,**
**dass** nahe der äußeren Mantelfläche des Heißwasserbrausekopfes (1, 1a, 1b) etwa 10 Heißwasserkanäle (9, 9a, 9b) in zueinander gleichen Umfangsabständen angeordnet sind und nahe der zentralen Achse des Heißwasserbrausekopfes 3 bis 4 Heißwasserkanäle (12) in zueinander gleichen Umfangsabständen arrangiert sind.

## Claims

1. Milk froth generation device for creating milk froth from milk powder (7) and hot water, including a hot water supply pipe and a water heater,
wherein said milk froth generation device comprises a substantially rotation-sym metrical hot water spraying head (1, 1a, 1b) having downwardly directed and open-ended hot water channels (9, 9a, 9b, 12) a few of which (9, 9a, 9b) being arranged near an outer mantle face of said hot water spraying head and at least one hot water channel (12) extending vertically near a central axis of said hot water spraying head and
wherein said hot water channels are connected via a hot water distribution chamber (16, 16a) in said hot water spraying head and said hot water supply pipe (17) with a hot water pressure generator and said water heater
**characterized in**
**that** at least one lower section each of said hot water channels (9, 9a, 9b) arranged near said outer mantle face are inclined in circumferential direction about 2 to 12° relative to the vertical, and that a plurality of said hot water channels (12) arranged near said central axis of said hot water spraying head extend in parallel to said central axis.

2. Milk froth generation device according to claim 1, **characterized in**
**that** only one lower section each of said hot water channels (9a, 9b) arranged near said outer mantle face is inclined about 2 to 12° relative to the vertical.

3. Milk froth generation device according to claim 1, **characterized in**
**that** said hot water channels (9) arranged near said outer mantle face are inclined about the whole length thereof about 2 to 12° relative to the vertical.

4. Milk froth generation device according to one of claims 1 to 3, **characterized in**
**that** said hot water spraying head (1, 1a) comprises a substantially cylindrical inner body (8, 8a, 8b) in the outer mantle face of which laterally open hot water channel slits are formed, and which comprises bores extending inside near said central axis as inner hot water channels (12) ,
**that** above said cylindrical inner body a substantially cylindrical ring (20, 20a), or ring section (20b), is slipped over which tightly seals said hot water channel slits (9, 9a, or 9b) on the sides,
**that** said ring (20, 20a), or ring section (20b), constitutes a component part of an outer body (11, 11a) which, in addition, includes an upper portion (21), or an upper portion section, and
**that** between an inner under side (15) of said outer body and an upper side (13, 13a) of said inner body, a hot water distribution chamber (16) is left free into which said hot water supply pipe (17) leads which is arranged on said upper portion (21), or said upper portion section (21b).

5. Milk froth generation device according to claim 4, **characterized in**
**that** said inner body (8a, 8b) and said ring (20a), or said ring section (20b), covering it are downwardly expanding in truncated cone shape, and
**that** said outer hot water channels (9a, 9b) are also radially inclined to the outside.

6. Milk froth generation device according to claim 5, **characterized in**
**that** said truncated cone shaped inner body (8b) and said outer body (11b) covering it by means of a ring section (20b) each include an upper cylindrical section serving to removably place said inner body within said outer body and provided with fastening elements, particularly a thread (29) shaped on said inner body (20b) as an outside screw thread penetrated by sections of said hot water channel slits (9b).

7. Milk froth generation device according to claim 5, **characterized in**
**that** said truncated cone shaped inner body comprises a collar which fits into an inner annular groove in said truncated cone shaped ring into which said inner body can be inserted, and
**that** said inner body and/or the ring consist(s) of elastic material so that said inner body is maintained form-locking and force-locking but manually releasable.

8. Milk froth generation device according to one of claims 4, 5 to 7, **characterized in**
**that** in said hot water spraying head (1, 1a, 1b), a sieve (19) is disposed between said hot water distribution chamber (16, 16a) and said hot water channels (9, 9a, 9b, 12).

9. Milk froth generation device according to claim 8, **characterized in**
**that** said sieve (19) is held between an inner flange (23) in said upper portion (21) and at least one range spacer formed out from the upper side of said inner body (8, 8a, 8b).

10. Milk froth generation device according to claim 6 or 9,
**characterized in**
**that** said pot-shaped outer body (11, 11a) consists of said upper portion (21) and a cylindrical section of said ring (20, 20a) screwed into said upper portion (21) which ring (20, 20a) is solidly connected with said inner body (8, 8a),
**that** from said upper portion (21) said inner flange (23) is formed out which has an outside screw thread, and
**that** in an upper cylindrical section of said ring (20, 20a), an internal thread (22) is tapped which can be screwed into said outside screw thread on said inner flange (23).

11. Milk froth generation device according to claim 10,
**characterized by**
a sealing washer (26) between said upper portion (21) and said ring (20, 20a) in the screwed-together state.

12. Milk froth generation device according to one of claims 1 to 11,
**characterized in**
**that** said froth generation device consists of poor heat conducting material.

13. Milk froth generation device according to claim 12,
**characterized in**
**that** the insert consists of neoprene.

14. Coffee machine, particularly espresso machine, comprising a water heater and a hot water pressure generator and a milk froth generation device according to one of the foregoing claims,
**characterized in**
**that** as the hot water pressure generator and the water heater of said milk froth generation device, the hot water pressure generator and the water heater of the coffee machine are used which are connected via said hot water pipe (17) with said hot water spraying head.

15. Milk froth generation device according to one of claims 1 to 13,
**characterized in**
**that** said hot water pressure generator is a water pump.

16. Milk froth generation device according to one of claims 1 to 13,
**characterized in**
**that** said hot water pressure generator and said water heater are integrated in a water boiler operating in accordance with the steam pressure principle.

17. Milk froth generation device according to one of claims 1 to 13, 15, 16,
**characterized in**
**that** near said outer mantle face of said hot water spraying head (1, 1a, 1b), about ten hot water channels (9, 9a, 9b) are disposed in even circumferential distances relative to each other, and near said central axis of said hot water spraying head, three to four hot water channels (12) are disposed in even circumferential distances relative to each other.

## Revendications

1. Dispositif de production de mousse de lait destiné à produire de la mousse de lait à partir de lait en poudre (7) et d'eau chaude, comportant une arrivée d'eau chaude et un réchauffeur d'eau,
dans lequel le dispositif de production de mousse de lait comporte une tête d'aspersion d'eau chaude (1, 1a, 1b), sensiblement symétrique en rotation, qui présente des canaux d'eau chaude (9, 9a, 9b, 12) orientés vers le bas et ouverts par le bas, dont certains (9, 9a, 9b) sont disposés de façon inclinée à proximité d'une surface d'enveloppe externe de la tête d'aspersion d'eau chaude et au moins un canal d'eau chaude (12) s'étend verticalement à proximité d'un axe central de la tête d'aspersion d'eau chaude, et
dans lequel les canaux d'eau chaude sont en relation avec un générateur de pression pour eau chaude et avec le réchauffeur d'eau par le biais d'une chambre de distribution d'eau chaude (16, 16a) dans la tête d'aspersion d'eau chaude, et par la conduite d'arrivée d'eau chaude (17),
**caractérisé en ce que** respectivement au moins un segment inférieur des canaux d'eau chaude (9, 9a, 9b) disposés à proximité de la surface d'enveloppe externe est incliné de 2 à 12° par rapport à la verticale dans la direction périphérique, et **en ce que** plusieurs canaux d'eau chaude (12) disposés à proximité de l'axe central de la tête d'arrosage d'eau chaude s'étendent parallèlement à l'axe central.

2. Dispositif de production de mousse de lait selon la revendication 1, **caractérisé en ce que** seul un segment inférieur respectif des canaux d'eau chaude (9a, 9b) disposés à proximité de la surface d'enveloppe externe est incliné de 2 à 12° par rapport à la verticale.

3. Dispositif de production de mousse de lait selon la revendication 1, **caractérisé en ce que** les canaux d'eau chaude (9) disposés à proximité de la surface d'enveloppe externe sont inclinés sur toute leur longueur de 2 à 12° par rapport à la verticale.

4. Dispositif de production de mousse de lait selon l'une des revendications 1 à 3, **caractérisé en ce que** la tête d'aspersion d'eau chaude (1, 1a) présente un corps interne (8, 8a, 8b) sensiblement cylindrique dans la surface d'enveloppe externe duquel sont formées des rainures de canal d'eau chaude latéralement ouvertes et qui présente des perçages s'étendant à l'intérieur à proximité de l'axe central en tant que canaux d'eau chaude (12) internes,
**en ce que** sur le corps intérieur cylindrique est retourné un anneau sensiblement cylindrique (20, 20a) ou un segment annulaire (20b) qui recouvre latéralement de façon hermétique les rainures de canal d'eau chaude (9, 9a ou 9b),
**en ce que** l'anneau (20, 20a) ou le segment annulaire (20b) est un composant d'un corps externe (11, 11a) qui présente en outre une partie supérieure (21) ou un segment de partie supérieure, et
**en ce qu'**entre une face inférieure interne (15) du corps externe et une face supérieure (13, 13a) du corps interne est ménagée une chambre de distribution d'eau chaude (16) dans laquelle débouche la conduite d'arrivée d'eau chaude (17) disposée au niveau de la partie supérieure (21) ou du segment de partie supérieure (21b).

5. Dispositif de production de mousse de lait selon la revendication 4, **caractérisé en ce que** le corps interne (8a, 8b) et l'anneau (20a) ou le segment annulaire (20b) qui le recouvre sont de forme tronconique s'élargissant vers le bas et
**en ce que** les canaux d'eau chaude (9a, 9b) externes sont aussi inclinés dans la direction radiale vers l'extérieur.

6. Dispositif de production de mousse de lait selon la revendication 5, **caractérisé en ce que** le corps interne (8b) de forme tronconique et le corps externe (11b) le recouvrant par un segment annulaire (20b) présentent respectivement un segment cylindrique supérieur servant à monter de façon amovible le corps interne dans le corps externe, lequel segment est muni d'éléments de fixation, en particulier d'un filetage (29) qui est conçu au niveau du corps interne (20b) sous forme d'un filetage extérieur et qui est traversé par des segments des rainures de canal d'eau chaude (9b).

7. Dispositif de production de mousse de lait selon la revendication 5, **caractérisé en ce que** le corps interne de forme tronconique présente un collet qui s'adapte dans une rainure annulaire interne pratiquée dans l'anneau de forme tronconique dans lequel le corps interne peut être inséré, et
**en ce que** le corps interne et/ou l'anneau se compose(nt) d'un matériau élastique, si bien que le corps interne est retenu dans l'anneau par engagement mécanique ou par adhérence, mais peut être détaché manuellement.

8. Dispositif de production de mousse de lait selon l'une des revendications 4, 5 à 7, **caractérisé en ce que** dans la tête d'aspersion d'eau chaude (1, 1a, 1b), un tamis (19) est disposé entre la chambre de distribution d'eau chaude (16, 16a) et les canaux d'eau chaude (9, 9a, 9b, 12).

9. Dispositif de production de mousse de lait selon la revendication 8, **caractérisé en ce que** le tamis (19) est retenu entre une bride interne (23) dans la partie supérieure (21) et au moins une pièce d'écartement façonnée dans la partie supérieure du corps interne (8, 8a, 8b).

10. Dispositif de production de mousse de lait selon la revendication 6 ou 9, **caractérisé en ce que** le corps externe (11, 11a) en forme de pot se compose de la partie supérieure (21) et d'un segment
cylindrique de l'anneau (20, 20a) vissé dans celle-ci et qui est relié fixement au corps interne (8, 8a),
**en ce qu'**est façonnée dans la partie supérieure (21) la bride interne (23) qui présente un filetage extérieur, et
**en ce que** dans un segment cylindrique supérieur de l'anneau (20, 20a) est découpé un filetage intérieur (22) qui peut être vissé dans le filetage extérieur sur la bride interne (23).

11. Dispositif de production de mousse de lait selon la revendication 10, **caractérisé par** une bague d'étanchéité (26) entre la partie supérieure (21) et l'anneau (20, 20a) à l'état vissé.

12. Dispositif de production de mousse de lait selon l'une des revendications 1 à 11, **caractérisé en ce que** le dispositif de production de mousse se compose d'un matériau peu conducteur de chaleur.

13. Dispositif de production de mousse de lait selon la revendication 12, **caractérisé en ce que** la garniture de joint est en néoprène.

14. Machine à café, en particulier machine expresso, comportant un réchauffeur d'eau et un générateur de pression pour eau chaude ainsi qu'un dispositif de production de mousse de lait selon l'une des revendications précédentes, **caractérisée en ce que** l'on utilise en tant que générateur de pression pour eau chaude et réchauffeur d'eau du dispositif de production de mousse de lait le générateur de pression pour eau chaude et le réchauffeur d'eau de la machine à café, reliés à la tête d'aspersion d'eau chaude par le biais de la conduite d'arrivée d'eau chaude (17).

15. Dispositif de production de mousse de lait selon l'une des revendications 1 à 13, **caractérisé en ce que** le générateur de pression pour eau chaude est une pompe à eau.

16. Dispositif de production de mousse de lait selon l'une des revendications 1 à 13, **caractérisé en ce que** le générateur de pression pour eau chaude et le réchauffeur d'eau sont intégrés dans un chauffe-eau selon le principe de la pression de vapeur.

17. Dispositif de production de mousse de lait selon l'une des revendications 1 à 13, 15, 16, **caractérisé en ce qu'**à proximité de la surface d'enveloppe externe de la tête d'aspersion d'eau chaude (1, 1a, 1b) sont disposés environ 10 canaux d'eau chaude (9, 9a, 9b) à distance périphérique égale les uns des autres, et **en ce qu'**à proximité de l'axe central de la tête d'aspersion d'eau chaude sont agencés 3 à 4 canaux d'eau chaude (12) à distance périphérique égale les uns des autres.
